# EUROPÄISCHE PATENTSCHRIFT

(11) **EP 1 564 424 B1**
(45) Veröffentlichungstag und Bekanntmachung des Hinweises auf die Patenterteilung: **17.11.2010**
(21) Anmeldenummer: 05100550.2
(22) Anmeldetag: 28.01.2005
(51) Int. Cl.: F16C 1/12, A01D 34/68

(54) **Gerät zur Rasen-, Garten- bzw. Grundstückspflege**
Device for lawn, garden and field maintenance
Dispositif pour l'entretien du gazon, jardin et champ

(30) Priorität: 12.02.2004 DE 102004007162
(43) Veröffentlichungstag der Anmeldung: 17.08.2005
(73) Patentinhaber: SABO-Maschinenfabrik GmbH, 51645 Gummersbach (DE)
(72) Erfinder: Joseph, Franz, 51766, Engelskirchen (DE)
(74) Vertreter: Magin, Ludwig Bernhard

(56) Entgegenhaltungen:
- EP-A- 1 285 568
- EP-A- 1 332 660
- US-A- 6 082 083
- US-A1- 2002 178 709
- US-A1- 2003 056 481

## Beschreibung

Die Erfindung betrifft ein handgeführtes Gerät vorzugsweise zur Rasen-, Garten- bzw. Grundstückspflege mit einem Motor und einem Fahrantriebschaltelement mittels dessen selektiv eine wirksame Verbindung zwischen dem Motor und wenigstens einem antreibbaren Rad des Geräts hergestellt werden kann, und einer Fahrgeschwindigkeitswahleinrichtung mittels deren wenigstens zwei Fahrgeschwindigkeiten auswählbar sind, wobei sowohl das Fahrantriebschaltelement als auch die Fahrgeschwindigkeitswahleinrichtung auf dasselbe Übertragungsmittel wirken.

Die DE-A1-199 64 347 zeigt einen selbstfahrenden Rasenmäher mit einem Griff mit einem Steuersystem, durch das die Fahrgeschwindigkeit des Rasenmähers manuell verändert werden kann. Das Steuersystem weist ein Griffstück auf, welches relativ zu einem unteren Teil des Griffs aufwärts und abwärts verschiebbar ist, um die Fahrgeschwindigkeit entsprechend zu erhöhen bzw. zu verringern.

Aus der Druckschrift "Service-Unterlagen Saison 1999/2000" der SABO-Maschinenfabrik GMBH, Seite 2.3 und 2.3.1 bis 2.3.5 geht ein Rasenmäher hervor, welcher einen Motorbremsbügel aufweist (Seite 2.3), der durch eine Bedienungsperson in einer an den eigentlichen Griff des Rasenmähers herangezogenen Stellung gehalten werden muss, um einen Betrieb eines Motors des Rasenmähers zu ermöglichen, indem er über einen Zug-Druck-Kabel mit einer Motorbremse zusammenwirkt. Darüber hinaus weist der Rasenmäher eine Schaltung, über die unterschiedliche Fahrgeschwindigkeiten vorgewählt werden können, indem die Schaltung über ein weiteres Zug-Druck-Kabel mit einer Spanneinrichtung eines eine Vario-Riemenscheibe umfassenden Riementriebs zusammenwirkt, und einen Schaltbügel auf, welcher über ein drittes Zug-Druck-Kabel auf ein Getriebe wirkt, um einen Fahrantrieb des Rasenmähers zu- bzw. abschalten zu können.

Die US-A-2003/0230416 zeigt einen Handsteuermechanismus eines Gerätes in der Art einer Motorhacke, der derart mit einer Hydraulikpumpe zusammenwirkt, dass das Gerät mit unterschiedlichen Fahrgeschwindigkeiten betrieben werden kann.

Die EP-A-1 266 557 zeigt ein selbstfahrendes Arbeitsgerät mit einem Führungsholm an dem ein Antriebsschalthebel sowie ein Fahrgeschwindigkeitswahlhebel vorgesehen sind. Um die Fahrgeschwindigkeit des Arbeitsgeräts einzustellen, weist das Fahrgeschwindigkeitswahlhebel einen drehbaren Griff auf.

Die gattungsgemäße US-A-6,082,083 offenbart einen Führungsholm für einen Rasenmäher mit einem Steuerungssystem, dass es einer Bedienungsperson erlaubt, die Fahrgeschwindigkeit des Rasenmähers manuell zu verändern. Das Steuerungssystem weist einen an dem Führungsholm vorgesehen Griff auf, der über eine Hebeleinrichtung auf ein Zug-Druck-Kabel wirkt.

Das der Erfindung zugrunde liegende Problem wird im aufwändigen Aufbau bekannter Geräte zur Rasen-, Garten- bzw. Grundstückspflege gesehen.

Dieses Problem wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Auf diese Weise wird ein handgeführtes Gerät zur Rasen-, Garten- bzw. Grundstückspflege mit einem Motor, einem Fahrantriebschaltelement und einer Fahrgeschwindigkeitswahleinrichtung zur Verfügung gestellt. Mittels des Fahrantriebschaltelements kann selektiv eine wirksame Verbindung zwischen dem Motor und wenigstens einem antreibbaren Rad des Geräts, d.h. eine Antriebsverbindung, hergestellt werden. Mittels der Fahrgeschwindigkeitswahleinrichtung können durch eine Bedienungspersonen wenigstens zwei Fahrgeschwindigkeiten vorgewählt werden, um das Gerät an die Erfordernisse des Einsatzumfeldes oder der Bedienungsperson anpassen zu können. Erfindungsgemäß bedienen sich sowohl das Fahrantriebschaltelement als auch die Fahrgeschwindigkeitswahleinrichtung zur Aktivierung bzw. Deaktivierung des Fahrantriebs bzw. zur Wahl der Fahrgeschwindigkeit desselben Übertragungsmittels. Da somit keine separaten Übertragungsmittel vorgesehen werden müssen, kann der Aufbau des Geräts vereinfacht werden. Das Fahrantriebschaltelement ist über eine Hebelanordnung mit dem Übertragungsmittel verbunden, so dass es möglich ist, die Bewegung des Fahrantriebschaltelements an das Übertragungsmittel zu übersetzen und/oder unterschiedliche bzw. mehrere Übersetzungen vorzusehen. Die Hebelanordnung weist vorzugsweise wenigstens zwei Hebel auf, welche in Abhängigkeit voneinander gegensinnig verschwenkbar sind, wodurch die durch das Fahrantriebschaltelement eingeleitete Bewegung verstärkt bzw. in unterschiedlicher bzw. wählbarer Potenz weitergegeben werden kann. Darüber hinaus kann das Gerät kostengünstiger ausgeführt werden. Bei einem erfindungsgemäßen Gerät kann es sich beispielsweise um einen Rasenmäher, einen Vertikutierer, eine Kehrmaschine, ein Reinigungsgerät oder ein anderes handgeführtes, selbstfahrendes Gerät handeln, welches in der Rasen-, Garten- bzw. Grundstückspflege oder auch im industriellen, privaten oder landwirtschaftlichen Bereich eingesetzt wird.

Bei dem Übertragungsmittel kann es sich um ein mechanisches Übertragungsmittel in der Art eines Gestänges oder einer Hebelanordnung etc. handeln. Üblicherweise werden derartige Funktionen an Geräten zur Rasen-, Garten bzw. Grundstückspflege mittels Zug-Druck-Kabeln realisiert, da diese kostengünstig sowie robust und geeignet sind, Schwenk- oder Verschiebebewegungen in einfacher Art und Weise zu übertragen.

Das Übertragungsmittel kann auf eine Kupplung und/oder ein Zahnradgetriebe wirken. Geräte zur Rasen-, Garten- bzw. Grundstückspflege weisen aber häufig Umschlingungsgetriebe bzw. Riementriebe zum Antrieb antreibbarer Räder sowie beispielsweise eines oder mehrerer unterhalb des Geräts bzw. innerhalb eines Gehäuses angeordneter Arbeitswerkzeuge, wie rotierender Mäh- oder Mulchmesser bzw. Messerbalken, Spindeln, Kehreinrichtungen, Vertikutiereinrichtungen etc. auf, da diese robust, kostengünstig und einfach zu warten sind. Derartige Riementriebe können eine von einem Motor erzeugte Drehbewegung über eine durch diesen in Rotation versetzte Antriebsriemenscheibe über einen Riemen, beispielsweise in der Art eines Keilriemens, an eine oder mehrere weitere Riemenscheiben übertragen, welche wiederum mit dem oder den Arbeitswerkzeugen direkt oder indirekt, beispielsweise über ein fakultativ eine Übersetzung zur Verfügung stellendes Getriebe verbunden ist/sind, um diese(s) anzutreiben. Das Übertragungsmittel kann hierbei derart auf den Riementrieb wirken, dass wenigstens ein Riemen des Riementriebs in Abhängigkeit von dem Übertragungsmittel eine Drehbewegung überträgt bzw. ein- bzw. ausgekuppelt wird.

Ist das Übertragungsmittel wirksam mit einer Spanneinrichtung des Riementriebes verbunden bzw. bestimmt es vorzugsweise die Stellung eines insbesondere eine Spannscheibe aufweisenden Spannarms, so kann durch eine Beeinflussung der Spannung des Riemens durch die Spanneinrichtung bzw. die auf den Riemen wirkende Spannscheibe bestimmt werden, ob und wieviel Drehbewegung durch den Riemen übertragen werden kann. Wird der Riemen durch die Spanneinrichtung nicht gespannt, so kann er keine Drehbewegung übertragen; ist er wenig gespannt, so rutscht der Riemen teilweise durch und es wird nur ein Teil der Drehbewegung übertragen; ist der Riemen hingegen voll gespannt, so rutscht dieser bezogen auf die antreibende bzw. die angetriebene Riemenscheibe nicht und die volle Drehbewegung bzw. Kraft wird übertragen. Auf diese Weise wird ein sanftes Anfahren des Geräts bei einer Betätigung des Fahrantriebschaltmittels durch eine Bedienungsperson ermöglicht, da der Riemen durch das auf die Spanneinrichtung wirkende Übertragungsmittel allmählich und nicht abrupt gespannt und der Fahrantrieb ebenso zugeschaltet wird, was durch eine insbesondere mit derartigen Geräten wenig oder nicht vertraute Bedienungsperson als angenehm empfunden wird. Darüber hinaus reduziert ein "sanftes" Einkuppeln den Verschleiß, insbesondere beweglicher Bauteile. Allgemein erlaubt eine derartige Ausführung aufgrund geringerer Belastungen bzw. einem Reduzieren bzw. Fehlen stoßartiger Belastungen eine reduzierte Dimensionierung der relevanten Bauteile. Ist das Übertragungsmittel in der Art eines Zug-Druck-Kabels vorgesehen, so kann eine Seele desselben, welche in einer Hülle des Zug-Druck-Kabels angeordnet ist, mit dem Fahrantriebschaltelement sowie der Spanneinrichtung in Verbindung stehen, um eine Bewegung des Fahrantriebschaltelements, insbesondere wenn dieses in der Art eines schwenkbaren Fahrantriebsbügels ausgebildet ist, an die Spanneinrichtung zu übertragen.

Weist der Riementrieb eine variable Riemenscheibe auf, so kann die Wahl der Geschwindigkeit über eine Beeinflussung der Spannung des Riemens des Riementriebs erfolgen. Eine bekannte variable Riemenscheibe weist im Wesentlichen eine obere und eine untere Scheibe auf, welche durch eine Feder gegeneinander belastet werden, und welche derart ausgebildet sind, dass eine Riemenscheibe mit sich nach innen verjüngendem Durchmesser zur Verfügung stellen. Der Riemen wirkt abhängig von der durch die Spanneinrichtung auf ihn ausgeübten Kraft auf die variable Riemenscheibe und drängt diese auseinander. Folglich weist die variable Riemenscheibe einen größeren wirksamen Durchmesser auf, wenn der Riemen nur wenig gespannt ist. Wird der Riemen hingegen stärker gespannt, so tritt dieser weiter in die variable Riemenscheibe ein und liegt an einem geringeren wirksamen Durchmesser an. Auf diese Weise überträgt die variable Riemenscheibe bei einem stärker gespannten Riemen eine höhere Drehzahl an die antreibbaren Räder und bewirkt somit eine schnellere Fahrgeschwindigkeit des Geräts als bei einem geringer gespannten Riemen.

Wird das Übertragungsmittel durch ein Zug-Druck-Kabel gebildet bzw. weist es ein solches auf, so kann die Hülle des Zug-Druck-Kabels mit einem ersten Hebel und seine Seele mit einem zweiten Hebel wirksam verbindbar bzw. verbunden sein. Es ist aber auch denkbar, die Seele des Zug-Druck-Kabels mit dem Fahrgeschwindigkeitschaltelement zu verbinden. Die Verbindung kann direkt oder indirekt erfolgen. Werden die Hebel voneinander weggeschwenkt, so wird bei einer derartigen Anordnung die Seele aus der Hülle gezogen; dies erfolgt in Abhängigkeit von einer evtl. vorgesehen und/oder veränderbaren Übersetzung oder in Abhängigkeit von fakultativ veränderbaren, einstellbaren Befestigungspunkten der Seele/Hülle an den Hebeln in unterschiedlicher Länge.

Das Fahrantriebschaltelement kann über weitere Hebel, Gestänge oder andere Mittel mit dem Übertragungsmittel in Verbindung stehen. In einfacher Art und Weise kann dies aber realisiert werden, indem der zweite Hebel und das Fahrantriebschaltelement gemeinsam verschwenkt werden. Hierzu können das Fahrantriebschaltelement und der zweite Hebel beispielsweise mittels eines Stifts, einer Schraube, einer Klinke oder anderer bekannter Verbindungselemente gekoppelt werden.

Eine einfache Verstellmöglichkeit, insbesondere bei der Verwendung eines Zug-Druck-Kabels, ergibt sich, wenn der zweite Hebel bezogen auf das Fahrantriebschaltelement wenigstens zwei Stellungen einnehmen kann, in denen er der Bewegung des Fahrantriebschaltelements folgen kann.

Das Fahrantriebschaltelement und der zweite Hebel können unterschiedliche Schwenkpunkt aufweisen. Um eine einfache Verbindung des Fahrantriebschaltelements und des zweiten Hebels zu ermöglichen, ohne hierbei die durch die Bauteile beschriebenen Schwenkbewegungen in Betracht ziehen zu müssen, können das Fahrantriebschaltelement und der zweite Hebel aber einen gemeinsamen Schwenkpunkt aufweisen.

Der erste Hebel und das Fahrantriebschaltelement können beispielsweise durch einen Stift, eine Klinke oder andere Verbindungselemente in zwei oder mehr Stellungen miteinander verbunden werden. Eine besonders einfache Ausführung ergibt sich aber dann, wenn der zweite Hebel und das Fahrantriebschaltelement derart verbunden sind, dass der zweite Hebel einer Bewegung des Fahrantriebschaltelements fakultativ verzögert folgt und somit nur in einer Stellung mit dem Fahrantriebschaltelements fest verbunden werden muss, um mit diesem zu verschwenken.

Dies lässt sich in einfacher Weise dadurch realisieren, dass das Fahrantriebschaltelement oder der zweite Hebel eine Führung, welche beispielsweise in der Art eines Langlochs ausgeführt sein kann, aufweist, in der ein mit dem jeweiligen anderen Bauteil verbundenes Verbindungselement, beispielsweise ein Stift o.ä., geführt wird.

Weisen die Hebel voneinander beabstandete Schwenkpunkte auf, so begünstigt dies eine abhängige Bewegung der Hebel, da diese in ihren den Schwenkpunkten benachbarten, angrenzenden Bereichen zusammenwirken können, um eine Übersetzung zu ermöglichen.

Hierzu können die Hebel miteinander kämmende Verzahnungen aufweisen, welche vorzugsweise in aneinander angrenzenden Bereichen der Hebel benachbart der Schwenkpunkte angeordnet sind. Eine Bewegung des zweiten Hebels in eine erste Richtung wird durch die Verzahnungen in eine Bewegung des ersten Hebels eine entgegengesetzte Richtung umgesetzt, wodurch der durch die Hebelanordnung übertragbare Weg vergrößert wird. Dies ist insbesondere bei der Verwendung eines Zug-Druck-Kabels günstig, da auf diese Weise, die Seele des Zug-Druck-Kabels weiter aus dessen Hülle herausgezogen werden kann.

Bei dem Fahrantriebschaltelement kann es sich um einen Fahrantriebsbügel handeln, welcher wie die Hebelanordnung an einem Endbereich bzw. angrenzend an einen Griffbereich an einem Führungsholm des Geräts vorgesehen sein kann. Ein derartiger Fahrantriebsbügel kann beispielsweise einteilig oder geteilt ausgebildet sein. Neben einer verschwenkbaren Ausbildung ist ebenso eine verschiebbare Griffanordnung oder jede andere geeignete Ausbildung des Fahrantriebschaltelements denkbar.

Das Fahrantriebschaltelement kann an dem Führungsholm wie auch die Hebelanordnung und/oder ein Motorbremsbügel des Geräts direkt angebracht sein. Ein einfache Montage ergibt sich aber, wenn eine Konsole vorgesehen ist, welche an dem Führungsholm vorgesehen ist und an der das Fahrantriebschaltelement, die Hebelanordnung bzw. der Motorbremsbügel angebracht werden kann.

In der Zeichnung ist ein nachfolgend näher beschriebene Ausführungsbeispiel der Erfindung dargestellt. Es zeigt:
- Fig. 1: eine Seitenansicht eines Geräts mit einem Führungsholm in einer Betriebsstellung,
- Fig. 2: eine vergrößerte Darstellung des in Figur 1 mit 2 markierten Bereichs des Führungsholms mit einer Hebelanordnung in einer Stellung, in der kein Fahrantrieb des Geräts erfolgt, wobei nur der bezogen auf die Fahrtrichtung des Geräts linksseitige Bereich des Führungsholms dargestellt ist,
- Fig. 3: eine Darstellung entsprechend Fig. 2, wobei die Hebelanordnung sich in einer zweiten Stellung befindet, in der sich das Gerät mit einer ersten Fahrgeschwindigkeit bewegt,
- Fig. 4: eine ebensolche Darstellung, wobei die Hebelanordnung eine dritte Stellung einnimmt, in der das Fahrzeug sich mit einer zweiten, schnelleren Fahrgeschwindigkeit bewegt und
- Fig. 5: eine schematische Darstellung eines Riementriebs des Geräts mit einer variablen Riemenscheibe sowie einer Spanneinrichtung, welche mit der Hebelanordnung über ein Zug-Druck-Kabel verbunden ist.

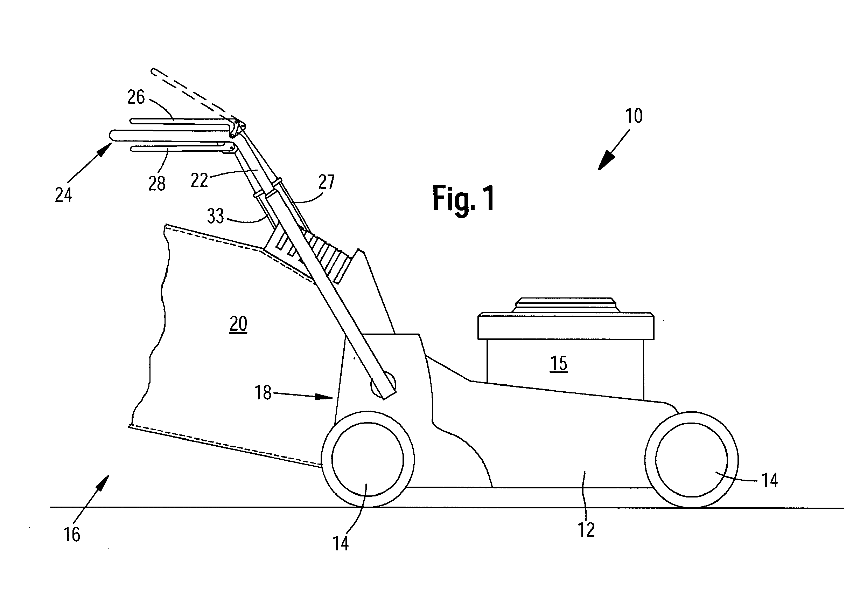

Es wird zuerst auf Fig. 1 Bezug genommen, in der ein Mähgerät bzw. ein Gerät 10 in der Art eines handgeführten bzw. selbstfahrenden Rasenmähers in einer Betriebsstellung gezeigt wird. Das Gerät 10 weist ein Gehäuse 12 auf, das sich über zwei vordere und zwei rückwärtige, antreibbare Räder 14 auf dem Untergrund abstützt. An dem Gehäuse 12 ist ein nur andeutungsweise dargestellter Motor 15, beispielsweise in der Art eines Verbrennungsmotors oder auch eines elektrischen Antriebs vorgesehen, um ein oder mehrere unterhalb des Gehäuses 12 angebrachte Mähmesser oder Arbeitseinheiten, beispielsweise in der Art von Sichelmessern oder auch von Spindelmessern, in Rotation zu versetzen, um Gras bzw. Pflanzenwuchs zu schneiden.

Das Gehäuse 12 weist in einem bezogen auf die übliche Betriebsrichtung des Geräts 10 rückwärtigen Bereich 16 eine nur andeutungsweise dargestellte Auswurföffnung 18 auf, über die abgeschnittene Pflanzenabschnitte das Gehäuse 12 verlassen können. Angrenzend an die Auswurföffnung 18 ist ein Fangsack 20 lösbar an dem Gehäuse 12 angebracht, um die Pflanzenabschnitte zu sammeln.

Ebenfalls in dem rückwärtigen Bereich 16 ist an dem Gehäuse 12 ein Führungsholm 22 vorgesehen. Dieser Führungsholm 22 ist in seinem im Betrieb einer Bedienungsperson zugewandten Endbereich 24 in der Art eines Griffs ausgebildet.

In diesem Endbereich 24 sind mit dem Führungsholm 22 sowohl ein Motorbremsbügel 26 als auch ein Fahrantriebsbügel bzw. ein Fahrantriebschaltelement 28 schwenkbar angebracht.

Der Motorbremsbügel 26 wirkt über ein Zug-Druck-Kabel 27 derart auf eine nicht gezeigte Motorbremseinrichtung, dass diese einen Betrieb des Motors 15 unterbindet, wenn der Motorbremsbügel 26 sich in seiner unbetätigten, nach vorn und oben geschwenkten Stellung (in Fig. 1 in unterbrochenen Linien dargestellt) befindet, die er in unbetätigtem Zustand beispielsweise durch die Wirkung einer Feder einnimmt.

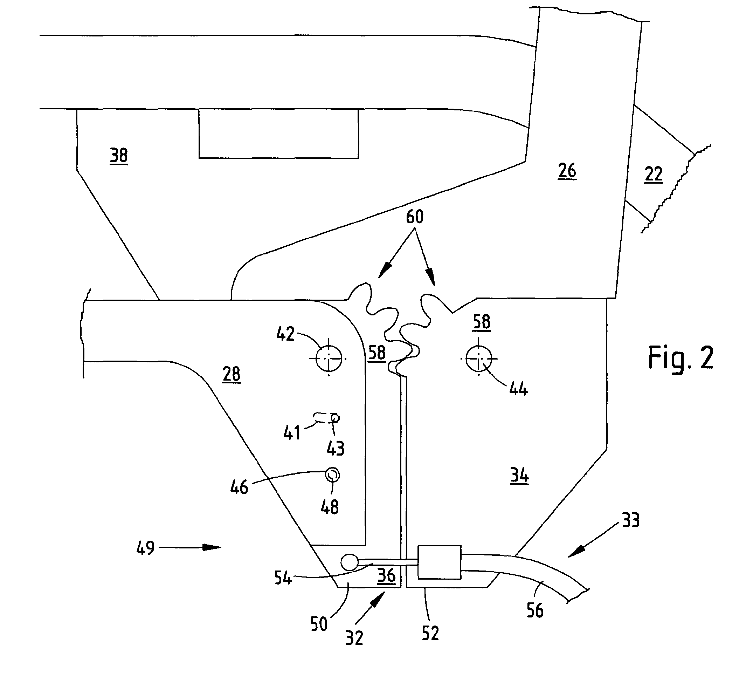

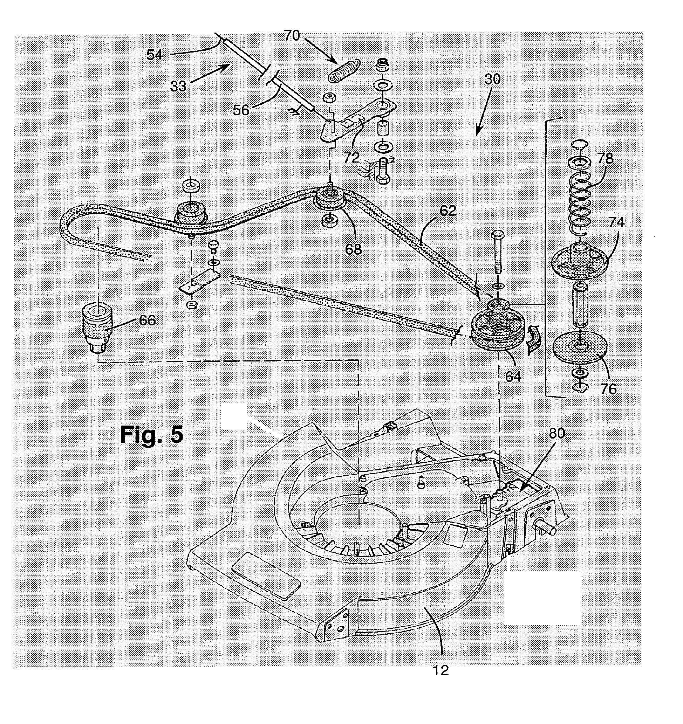

Das Fahrantriebschaltelement 28 wiederum wirkt mit einem Riementrieb 30 (siehe Figur 5) des Geräts 10 über eine Hebelanordnung 32, wie sie in den Figuren 2 bis 4, auf die nun ebenfalls Bezug genommen wird, in unterschiedlichen Stellungen gezeigt wird, und ein Zug-Druck-Kabel 33 zusammen.

Die Hebelanordnung 32 weist neben dem Fahrantriebschaltelement 28 einen ersten Hebel 34 und einen zweiten Hebel 36 auf. Sowohl das Fahrantriebschaltelement 28 als auch der erste Hebel 34 und der zweite Hebel 36 sind an einer Konsole 38 angebracht, welche wiederum fest an dem Endbereich 24 des Führungsholms 22, vorzugsweise in einem gekröpften Bereich 40 vorgesehen ist, in der der Endbereich 24 in den eigentlichen Führungsholm 22 übergeht.

Das Fahrantriebschaltelement 28 und der zweite Hebel 36 sind mit der Konsole 38 um einen gemeinsamen Schwenkpunkt 42 mittels üblicher Befestigungsmittel schwenkbar verbunden. Der erste Hebel 34 ist an der Konsole um einen zweiten, von dem ersten horizontal beabstandeten Schwenkpunkt 44 schwenkbar angebracht.

Das Fahrantriebschaltelement 28 und der zweite Hebel 36 sind darüber hinaus derart gegeneinander schwenkbar verbunden, dass in dem zweiten Hebel 36 ein Langloch 41 (in den Figuren 2 - 4 in unterbrochenen Linien angedeutet) vorgesehen ist, in dem ein mit dem Fahrantriebschaltelement 28 fest verbundenes Verbindungselement 43, beispielsweise in der Art eines Stifts oder einer Schraube geführt wird.

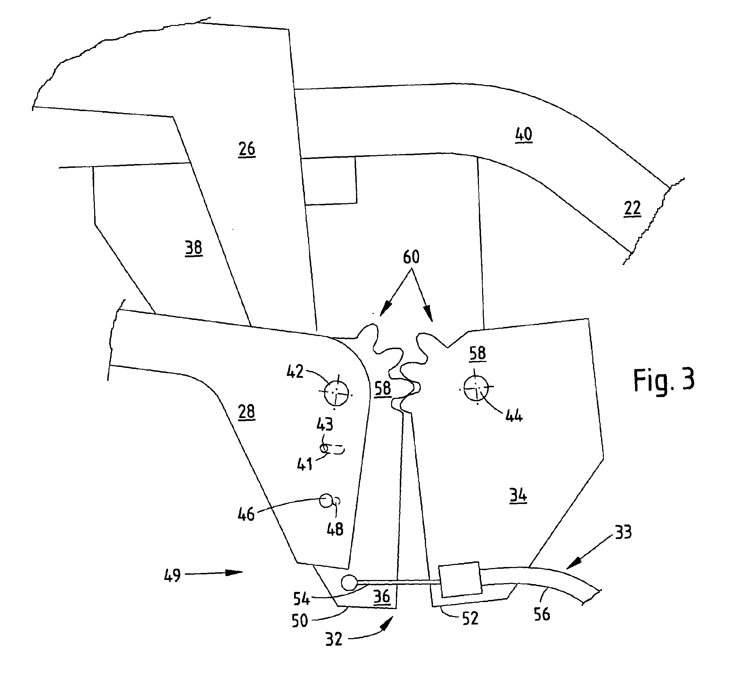

Das Fahrantriebschaltelement 28 und der zweite Hebel 36 können darüber hinaus in ihrer in Figur 2 gezeigten Stellung mittels eines Verbindungselements 46 verbunden werden, welches vorzugsweise verliersicher mit dem Fahrantriebschaltelement 28 verbunden ist und beispielsweise in eine nur andeutungsweise gezeigte Aussparung 48 in dem zweiten Hebel 36 (siehe Fig. 3) eingreifen kann.

Durch die beschriebene Option einer Verbindung des Fahrantriebschaltelements 28 und des zweiten Hebels 36 in wenigstens zwei unterschiedlichen Stellung, wird eine Fahrgeschwindigkeitswahleinrichtung 49 zur Verfügung gestellt, deren Funktionsweise die noch genauer beschrieben wird.

Der erste Hebel 34 und der zweite Hebel 36 sind von den jeweiligen Schwenkpunkten 42, 44 beabstandeten und ineinander zugewandten Endbereichen 50, 52 derart mit dem Zug-Druck-Kabel 33 verbunden, dass dessen Seele 54 mit dem zweiten Hebel und die Hülle 56 mit dem ersten Hebel 34 fest verbunden ist.

Darüber hinaus sind der erste Hebel 34 und der zweite Hebel 36 benachbart zu ihren Schwenkpunkte 42, 44 in angrenzenden Bereichen 58 mit Verzahnungen 60 versehen, welche ineinander eingreifen, so dass sie im Falle einer Schwenkbewegung miteinander kämmen.

Es wird nun auch auf Figur 5 Bezug genommen, in der der bereits zuvor angesprochene Riementrieb 30 genauer dargestellt wird. Der Riementrieb 30 weist unter anderem einen Keilriemen bzw. einen Riemen 62 auf, welcher eine variable Riemenscheibe 64, eine auf einer Abtriebswelle (nicht gezeigt) des Motors 14 aufgesetzte Antriebsriemenscheibe 66 sowie eine Spannscheibe 68 umschlingt.

Die Spannscheibe 68 ist auf einem durch eine Feder 70 in Richtung einer den Riemen 62 nicht spannenden Stellung belasteten, mit dem Gehäuse 12 schwenkbar verbundenen Spannarm 72 angeordnet, an welchem die Seele 54 des Zug-Druck-Kabels 33 in der Art angreift, dass eine Bewegung der Seele 54 in der Hülle 56 den Spannarm 72 verschwenkt.

Die variable Riemenscheibe 64 weist in bekannter Art und Weise eine obere Scheibe 74 und eine untere Scheibe 76 auf, welche durch eine Feder 78 zusammengedrückt werden. Abhängig von der Spannung des die Riemenscheibe 64 umschlingen Riemens 62 werden die obere und die untere Scheibe 74, 76 gegen die Wirkung der Feder 78 auseinandergedrängt wodurch der Riemen 62 tiefer bzw. weniger tief in die variable Riemenscheibe 64 eingreift, wodurch diese mit einer höheren bzw. geringeren Drehzahl rotiert.

Die variable Riemenscheibe 64 ist wiederum mit einem Getriebe 80 verbunden, welches die Rotation der variable Riemenscheibe 66 in eine Drehbewegung der antreibbaren Räder 14 des Geräts 14 umsetzt. Bei dem Getriebe 80 kann es sich um ein bekanntes Ein-Ganggetriebe handeln, welches üblicherweise eine Übersetzung aufweist, welche die hohe Drehzahl der Riemenscheibe 66 in eine niedrigere Drehzahl übersetzt.

Im Folgenden wird die Funktionsweise der zuvor beschriebenen Baugruppen genauer beschrieben:

Um das Gerät 10 zu betreiben, muss zuerst der Motorbremsbügel 26 durch eine Bedienungsperson in seine in Figur 1 gezeigte betätigte Stellung gebracht werden, in der die nicht gezeigte Motorbremse einen Betrieb des Motors 15 nicht verhindert. Sodann betätigt die Bedienungsperson einen Anlasser, beispielsweise einen Seilzug, oder lässt den Motor 15 in anderer bekannter Art an. Der Motor 15 steht nun mit einem nicht gezeigten Messer, welches innerhalb des Gehäuses 12 angeordnet ist in Verbindung, so dass das Messer rotiert. Um Sicherzustellen, dass der Motorbremsbügel 26 vor dem Fahrantriebschaltelement 28 betätigt wird, kann der Motorbremsbügel 26 einen Sperrmechanismus, beispielsweise in der Art einer mit der Verzahnung 60 oder einer Aussparung in dem ersten Hebel 34 zusammenwirkenden Klinke, aufweisen bzw. mit einem solchen zusammenwirken, welcher eine Betätigung des Fahrantriebschaltelements 28 unterbindet, wenn der Motorbremsbügel nicht betätigt ist.

Das Fahrantriebschaltelement 28 ist zu Beginn nicht betätigt. Die Hebelanordnung 32, auf welche noch genauer eingegangen wird, sowie das Zug-Druck-Kabel 33 befinden sich in ihrer in Figur 2 dargestellten Stellung, in der das Zug-Druck-Kabel 33 den Spannarm 72 nicht gegen die Wirkung der Feder 70 (siehe nun auch Figur 5) verschwenkt. Die auf dem Spannarm 72 angeordnete Spannscheibe 68 spannt den Riemen 62 des Riementriebes 30 somit nicht und der Riemen 62 liegt locker sowohl auf der Antriebsriemenscheibe 66 als auch auf der variablen Riemenscheibe 64 auf und überträgt keine Bewegung von der Antriebsriemenscheibe 66 an die variable Riemenscheibe 64. Weder der Riemen 62 noch die Spannscheibe 68, die variable Riemenscheibe 64 oder das Getriebe 80 befindet sich in Bewegung, wodurch einem vorzeitigen Verschleiß der Bauteile vorgebeugt wird.

Um nun den Fahrantrieb zu aktivieren, d.h. eine wirksame Verbindung zwischen dem Motor 15 und den antreibbaren, rückwärtigen Rädern 14 des Geräts 10 herzustellen, betätigt die Bedienungsperson das Fahrantriebschaltelement 28, indem sie es in seine ebenfalls in Figur 1 dargestellte, an den Endbereich 24 des Führungsholms 22 herangezogene Stellung bringt.

Durch ein Verschwenken des Fahrantriebschaltelements 28 um seinen Schwenkpunkt 42 wird allgemein durch ein Zusammenwirken des Fahrantriebschaltelements 28 und des zweiten Hebels 36 die einenends mit dem zweiten Hebel 36 fest verbundene Seele 54 des Zug-Druck-Kabels 33 aus der mit dem ersten Hebel 34 fest verbundenen Hülle 56 herausgezogen, da der zweite Hebel 36 der Schwenkbewegung des Fahrantriebschaltelements 28 folgt. Andernends wird die Seele 54 in die Hülle 56 hineingezogen und bewegt somit den mit ihr verbundenen Spannarm 72 gegen die Wirkung der Feder 70, wodurch die Spannscheibe 68 auf den Riemen 62 wirkt und diesen spannt. Durch die Bewegung des Spannarms 72, welche durch die Spannscheibe 68 an den Riemen 62 übertragen wird, wird dieser langsam gespannt und in wirksamen, im Wesentlichen reibschlüssigen Eingriff mit der Antriebsriemenscheibe 66 und der variablen Riemenscheibe 64 gebracht, so dass die von der Antriebsriemenscheibe 66 von dem Motor 15 kommende Bewegung an die variable Riemenscheibe 64 übertragen wird, um an das Getriebe 80 und letztlich an die angetriebenen Räder 14 als Fahrantrieb des Geräts 10 übertragen zu werden. Da das Einkuppeln nicht, wie dies sonst häufig üblich ist, über ein kupplungsloses Getriebe, sondern über den fortschreitend in Eingriff gelangenden Riementrieb 30 erfolgt, geschieht das Zuschalten des Fahrantriebs nicht abrupt sondern allmählich, was durch eine Bedienungsperson als ein "weiches" Zuschalten des Fahrantriebs empfunden ist und wodurch die Handhabbarkeit insbesondere bei mit derartigen Geräten nicht oder wenig vertrauten Bedienungspersonen wesentlich verbessert bzw. vereinfacht wird, sowie der Verschleiß und die notwendige Dimensionierung der relevanten Bauteile verringert wird.

Im Folgenden wird nun zuerst auf Fig. 3 eingegangen, die die eine Fahrgeschwindigkeitswahleinrichtung 49 zur Verfügung stellende Hebelanordnung 32 in einer ersten von im vorliegenden Ausführungsbeispiel zwei möglichen betätigten Stellungen des Fahrantriebschaltelements 28 zeigt. Diese Stellung nimmt die Hebelanordnung 32 bei einer Betätigung des Fahrantriebschaltelements 28 ein, wenn das Fahrantriebschaltelement 28 mit dem zweiten Hebel 36 nicht mittels des Verbindungselements 46 verbunden ist und sich das Verbindungselement 43 in dem Langloch 41 in dem zweiten Hebel von einem ersten dem ersten Hebel 34 zugewandten Endbereich des Langlochs 41 bewegen kann, bis es an einem zweiten gegenüberliegenden Endbereich des Langlochs 41 zur Anlage kommt und den zweiten Hebel 36 bei seiner weiteren Bewegung mitnimmt.

Eine Betätigung des Fahrantriebschaltelements 28 bewirkt in diesem Fall eine verzögerte Bewegung des zweite Hebel 36. Somit wird zu Beginn der Schwenkbewegung des Fahrantriebschaltelements 28 weder die Seele 54 aus der Hülle 56 gezogen noch wird durch die Verzahnungen 60 eine Bewegung von dem zweiten Hebel 36 an den ersten Hebel 34 übertragen. Beide Hebel 34 und 36 bleiben zumindest im Wesentlichen in ihrer in Fig. 2 dargestellten Stellung. Sobald der zweite Hebel 36 aber durch das Fahrantriebschaltelement 28 mitgenommen wird, wenn das Verbindungselement 43 in dem zweiten Endbereich des Langlochs 41 anschlägt, so wird der erste Hebel 34 aufgrund der kämmenden Verzahnungen 60 der beiden Hebel 34, 36 in einer der Schwenkbewegung des Fahrantriebschaltelements 28 bzw. des zweiten Hebels 36 entgegengesetzten Richtung verschwenkt und die Seele 54 wird durch die Bewegung der Hebel 34, 36 aus der Hülle gezogen.

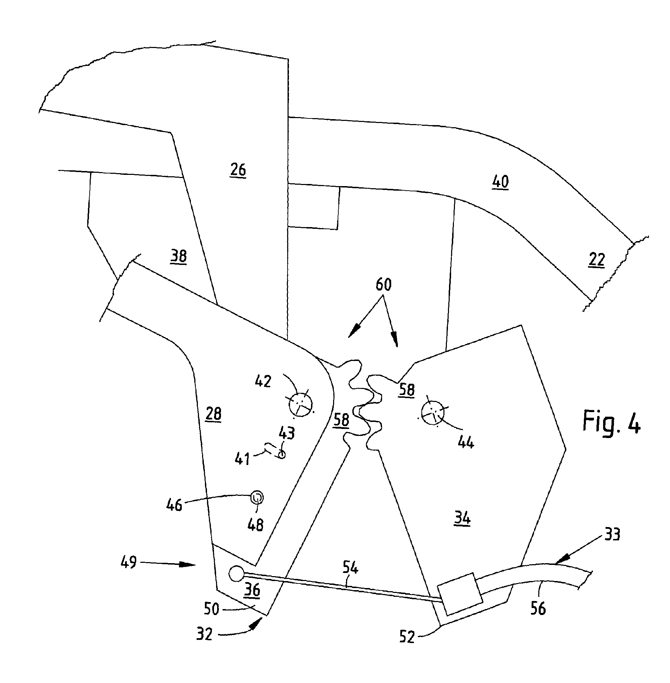

Es wird nun Bezug auf Figur 4 genommen, die die Hebelanordnung 32 bei einer Betätigung des Fahrantriebschaltelements 28 einnimmt, wenn der Fahrantriebschalthebel mittels des Verbindungselements 46 mit dem zweiten Hebel 36 verbunden ist. In diesem Fall verschwenkt der zweite Hebel 36 sofort zusammen mit dem Fahrantriebschaltelement 28, wenn dieses in seine in Figur 1 gezeigte betätigte Stellung gebracht wird. Diese Schwenkbewegung wird über die kämmenden Verzahnungen 60 an den ersten Hebel 34 übertragen, wodurch dieser eine der Schwenkbewegung des zweiten Hebels 36 entgegengesetzte Schwenkbewegung ausführt. Da sowohl der mit der Seele 54 fest verbundene zweite Hebel 36 als auch der erste Hebel 34, welcher mit der Hülle 56 des Zug-Druck-Kabels 56 fest verbunden ist, unverzögert verschwenkt werden, wird die Seele 54 bezogen auf die Hülle 56 wesentlich stärker bewegt bzw. aus dieser herausgezogen. Im vorliegenden Ausführungsbeispiels wird der Weg in etwa verdoppelt.

Da die Seele 54 einenends weiter aus der Hülle 56 herausgezogen wird, wird ihr gegenüberliegendes Ende weiter in die Hülle 56 hineingezogen, wodurch es der Spannarm 72 durch die Seele 54 weiter verschwenkt und der Riemen 62 durch die Spannscheibe 68 stärker gespannt wird.

Die stärkere Spannung des Riemens 62 bewirkt, dass auf die variable Riemenscheibe 64 eine größere Kraft ausgewirkt wird, welche die obere und die untere Scheibe 74, 76 gegen die Wirkung der Feder 78 auseinander drängt und der Riemen weiter in die variable Riemenscheibe 64 eindringt. Auf diese Weise wird das Übersetzungsverhältnis des Riementriebs 30 derart verändert, dass die variable Riemenscheibe 64 bezogen auf die Drehzahl mit der sie in Figur 2 dargestellten Stellung der Hebelanordnung rotiert, mit einer erhöhten Drehzahl rotiert. Diese an das Getriebe 80 und von diesem an die angetriebenen, rückwärtigen Räder 14 des Geräts übertragene Drehzahl bewirkt, dass das Gerät mit einer bezogen auf die in Figur 2 dargestellte Stellung der Hebelanordnung schnelleren Fahrgeschwindigkeit betrieben wird.

Für den Fachmann ist es ersichtlich, dass durch Abwandlungen der Hebelanordnungen, beispielsweise ein Vorsehen eines oder mehrer weiterer Hebel(s), weiterer mit dem Verbindungselement 46 zusammenwirkendender Aussparungen etc. eine Auswahl einer oder mehrerer weiterer Geschwindigkeiten realisierbar ist. Darüber hinaus ist es denkbar, dass mittels der Verzahnung 60 ein festes oder veränderbares Übersetzungsverhältnis zwischen dem ersten und dem zweiten Hebel 34, 36 vorgesehen werden kann, so dass der Abstand zwischen den Hebeln 34, 36 variabel und somit die auszuwählende Geschwindigkeit weiter flexibel ist.

## Patentansprüche

1. Handgeführtes Gerät (10) vorzugsweise zur Rasen-, Garten- bzw. Grundstückspflege mit einem Motor (15) und einem Fahrantriebschaltelement (28) mittels dessen selektiv eine wirksame Verbindung zwischen dem Motor (15) und wenigstens einem antreibbaren Rad (14) des Geräts hergestellt werden kann, und einer Fahrgeschwindigkeitswahleinrichtung (49) mittels deren wenigstens zwei Fahrgeschwindigkeiten auswählbar sind, wobei sowohl das Fahrantriebschaltelement (28) als auch die Fahrgeschwindigkeitswahleinrichtung (49) auf dasselbe Übertragungsmittel wirken, und einer Hebelanordnung (32), die eine Bewegung des Fahrantriebschaltelements (28) an das Übertragungsmittel überträgt, **dadurch gekennzeichnet, dass** die Hebelanordnung (32) wenigstens zwei Hebel (34, 36) aufweist, die in Abhängigkeit voneinander gegensinnig verschwenkbar sind.

2. Gerät nach Anspruch 1, **dadurch gekennzeichnet, dass** es sich bei dem Übertragungsmittel um ein mechanisches Übertragungsmittel handelt bzw. das Übertragungsmittel ein Zug-Druck-Kabel (33) aufweist bzw. in der Art eines Zug-Druck-Kabels (33) ausgebildet ist.

3. Gerät nach Anspruch nach einem oder mehreren der vorherigen Ansprüche, **dadurch gekennzeichnet, dass** das Übertragungsmittel wirksam mit einem Riementrieb (30) vorzugsweise derart verbunden ist, dass wenigstens ein Riemen (62) des Riementriebs (30) in Abhängigkeit von dem Übertragungsmittel eine Drehbewegung überträgt.

4. Gerät nach Anspruch 3, **dadurch gekennzeichnet, dass** das Übertragungsmittel wirksam mit einer Spanneinrichtung des Riementriebs (30) verbunden ist und vorzugsweise die Stellung eines insbesondere eine Spannscheibe (68) aufweisenden Spannarms (72) bestimmt.

5. Gerät nach Anspruch 3 oder 4, **dadurch gekennzeichnet, dass** der Riementrieb (30) eine variable Riemenscheibe (64) aufweist.

6. Gerät nach einem oder mehreren der Ansprüche 2 bis 5, **dadurch gekennzeichnet, dass** die Hülle (56) des Zug-Druck-Kabels (33) mit dem ersten Hebel (34) und die Seele (54) des Zug-Druck-Kabels (33) mit dem zweiten Hebel (36) wirksam verbindbar bzw. verbunden ist.

7. Gerät nach Anspruch 5 oder 6, **dadurch gekennzeichnet, dass** der zweite Hebel (36) gemeinsam mit dem Fahrantriebschaltelement (28) verschwenkt werden kann.

8. Gerät nach Anspruch 7, **dadurch gekennzeichnet, dass** der zweite Hebel (36) bezogen auf das Fahrantriebschaltelement (28) wenigstens zwei Stellungen einnehmen kann, in denen er mit dem Fahrantriebschaltelement (28) derart in Verbindung steht, dass er dessen Bewegung folgen kann.

9. Gerät nach Anspruch 7 oder 8, **dadurch gekennzeichnet, dass** das Fahrantriebschaltelement (28) und der zweite Hebel (36) einen gemeinsamen Schwenkpunkt (42) aufweisen.

10. Gerät nach einem oder mehreren der Ansprüche 7 bis 9, **dadurch gekennzeichnet, dass** der zweite Hebel (36) und das Fahrantriebschaltelement (28) derart verbunden sind, dass der zweite Hebel (36) einer Bewegung des Fahrantriebschaltelements (28) fakultativ verzögert folgt.

11. Gerät nach Anspruch 10, durch **gekennzeichnet**, dass das Fahrantriebschaltelement (28) oder der zweite Hebel (36) eine Führung, beispielsweise in der Art eines Langlochs (41) aufweist, in der ein mit dem jeweiligen anderen Bauteil verbundenes Verbindungselement (43), welches beispielsweise in der Art eines Stifts ausgeführt ist, geführt wird.

12. Gerät nach einem oder mehreren der Ansprüche 6 bis 11, **dadurch gekennzeichnet, dass** die Hebel (34, 36) beabstandete Schwenkpunkte (42, 44) aufweisen.

13. Gerät nach einem oder mehreren der Ansprüche 6 bis 12, **dadurch gekennzeichnet, dass** die Hebel (34, 36) miteinander kämmende Verzahnungen (60) aufweisen, welche vorzugsweise in aneinander angrenzenden Bereichen (58) der Hebel (34, 36) benachbart der Schwenkpunkte (42, 44) angeordnet sind.

14. Gerät nach einem oder mehreren der vorherigen Ansprüche, **dadurch gekennzeichnet, dass** das Fahrantriebschaltelement (28) bei welchem es sich vorzugsweise um einen Fahrantriebsbügel handelt, die Hebelanordnung (32) an einem Führungsholm (22) des Geräts (10) vorzugsweise in einem Endbereich (24) desselben vorgesehen sind.

15. Gerät nach Anspruch 14, **dadurch gekennzeichnet, dass** das Fahrantriebschaltelement (28) und die Hebelanordnung (32) an einer mit dem Führungsholm (22) bzw. dessen Endbereich (24) vorgesehenen Konsole (38) angebracht sind, an welcher vorzugsweise auch ein Motorbremsbügel (26) des Geräts (10) angebracht ist.

## Claims

1. Hand-guided apparatus (10), preferably for maintenance of a lawn, garden or plot of land, comprising a motor (15) and a running drive switching element (28) by means of which an operative connection between the motor (15) and at least one drivable wheel (14) of the apparatus can be selectively established, and comprising a running speed selector (49), by means of which at least two running speeds can be selected, both the running drive switching element (28) and the running speed selector (49) acting on the same transmission means, and further comprising a lever arrangement (32), which transmits a movement of the running drive switching element (28) to the transmission means, **characterized in that** the lever arrangement (32) has at least two levers (34, 36), which can be pivoted in opposite directions in dependence on each other.

2. Apparatus according to Claim 1, **characterized in that** the transmission means is constituted by a mechanical transmission means or the transmission means has a push-pull cable (33) or is configured in the manner of a push-pull cable (33).

3. Apparatus according to one or more of the previous claims, **characterized in that** the transmission means is operatively connected to a belt drive (30) preferably such that at least one belt (62) of the belt drive (30) transmits a rotary movement in dependence on the transmission means.

4. Apparatus according to Claim 3, **characterized in that** the transmission means is operatively connected to a tensioning device of the belt drive (30) and preferably determines the setting of a tensioning arm (72) having, in particular, a tension washer (68).

5. Apparatus according to Claim 3 or 4, **characterized in that** the belt drive (30) has a variable belt pulley (64).

6. Apparatus according to one or more of claims 2 to 5, **characterized in that** the sheathing (56) of the push-pull cable (33) is operatively connectable or connected to the first lever (34), and the core (54) of the push-pull cable (33) is operatively connectable or connected to the second lever (36).

7. Apparatus according to Claim 5 or 6, **characterized in that** the second lever (36) can be pivoted jointly with the running drive switching element (28).

8. Apparatus according to Claim 7, **characterized in that** the second lever (36) can assume, in relation to the running drive switching element (28), at least two settings, in which it can be connected to the running drive switching element (28) in such a way that it can follow the movement thereof.

9. Apparatus according to Claim 7 or 8, **characterized in that** the running drive switching element (28) and the second lever (36) have a common pivot point (42).

10. Apparatus according to one or more of Claims 7 to 9, **characterized in that** the second lever (36) and the running drive switching element (28) are connected in such a way that the second lever (36) follows a movement of the running drive switching element (28) with an optional delay.

11. Apparatus according to Claim 10, **characterized in that** the running drive switching element (28) or the second lever (36) has a guide, for instance in the manner of a long hole (41), in which is guided a connecting element (43) connected to the respective other structural part and realized, for instance, in the manner of a pin.

12. Apparatus according to one or more of claims 6 to 11, **characterized in that** the levers (34, 36) have mutually spaced pivot points (42, 44).

13. Apparatus according to one or more of claims 6 to 12, **characterized in that** the levers (34, 36) have intermeshing tooth systems (60), which are preferably arranged in mutually adjoining regions (58) of the levers (34, 36), adjacent to the pivot points (42, 44).

14. Apparatus according to one or more of the previous claims, **characterized in that** the running drive switching element (28), which is preferably constituted by a running drive guard, and the lever arrangement (32) are provided on a handlebar (22) of the apparatus (10), preferably in an end region (24) of the same.

15. Apparatus according to Claim 14, **characterized in that** the running drive switching element (28) and the lever arrangement (32) are attached to a bracket (38) which is arranged with the handlebar (22) or the end region (24) thereof and to which a motor brake arm (26) of the apparatus (10) is also preferably attached.

## Revendications

1. Appareil guidé à la main (10), de préférence pour l'entretien du gazon, du jardin ou d'un champ, comprenant un moteur (15) et un élément de commutation d'entraînement de conduite (28) au moyen duquel une connexion active entre le moteur (15) et au moins une roue motrice (14) de l'appareil peut être établie de manière sélective, et un dispositif de sélection de vitesse de conduite (49) au moyen duquel au moins deux vitesses de conduite peuvent être sélectionnées, l'élément de commutation d'entraînement de conduite (28) ainsi que le dispositif de sélection de vitesse de conduite (49) agissant sur le même moyen de transfert, et un agencement de levier (32) qui transmet un mouvement de l'élément de commutation d'entraînement de conduite (28) au moyen de transfert, **caractérisé en ce que** l'agencement de levier (32) présente au moins deux leviers (34, 36), qui peuvent pivoter en sens contraire en fonction l'un de l'autre.

2. Appareil selon la revendication 1, **caractérisé en ce que** le moyen de transfert est un moyen de transfert mécanique ou **en ce que** le moyen de transfert présente un câble de traction-compression (33) ou est réalisé à la manière d'un câble de traction-compression (33).

3. Appareil selon l'une quelconque ou plusieurs des revendications précédentes, **caractérisé en ce que** le moyen de transfert est connecté activement à un entraînement à courroie (30), de préférence de telle sorte qu'au moins une courroie (62) de l'entraînement à courroie (30) transmette un mouvement de rotation en fonction du moyen de transfert.

4. Appareil selon la revendication 3, **caractérisé en ce que** le moyen de transfert est connecté activement à un dispositif de serrage de l'entraînement à courroie (30) et de préférence définit la position d'un bras de serrage (72) présentant notamment une poulie de serrage (68).

5. Appareil selon la revendication 3 ou 4, **caractérisé en ce que** l'entraînement à courroie (30) présente une poulie à courroie variable (64).

6. Appareil selon l'une quelconque ou plusieurs des revendications 2 à 5, **caractérisé en ce que** la gaine (56) du câble de traction-compression (33) est connectée au premier levier (34) et le toron (54) du câble de traction-compression (33) peut être connecté ou est connecté activement au deuxième levier (36).

7. Appareil selon la revendication 5 ou 6, **caractérisé en ce que** le deuxième levier (36) peut être pivoté conjointement avec l'élément de commutation d'entraînement de conduite (28).

8. Appareil selon la revendication 7, **caractérisé en ce que** le deuxième levier (36) peut adopter au moins deux positions, par rapport à l'élément de commutation d'entraînement de conduite (28), dans lesquelles il est en liaison avec l'élément de commutation d'entraînement de conduite (28) de telle sorte qu'il puisse suivre son mouvement.

9. Appareil selon la revendication 7 ou 8, **caractérisé en ce que** l'élément de commutation d'entraînement de conduite (28) et le deuxième levier (36) présentent un pivot commun (42).

10. Appareil selon l'une quelconque ou plusieurs des revendications 7 à 9, **caractérisé en ce que** le deuxième levier (36) et l'élément de commutation d'entraînement de conduite (28) sont connectés de telle sorte que le deuxième levier (36) suit un mouvement de l'élément de commutation d'entraînement de conduite (28), de manière ralentie en option.

11. Appareil selon la revendication 10, **caractérisé en ce que** l'élément de commutation d'entraînement de conduite (28) ou le deuxième levier (36) présente un guide, par exemple à la manière d'un trou oblong (41), dans lequel est guidé un élément de connexion (43) connecté à l'autre composant respectif, qui est réalisé par exemple à la manière d'une broche.

12. Appareil selon l'une quelconque ou plusieurs des revendications 6 à 11, **caractérisé en ce que** les leviers (34, 36) présentent des pivots espacés (42, 44).

13. Appareil selon l'une quelconque ou plusieurs des revendications 6 à 12, **caractérisé en ce que** les leviers (34, 36) présentent des dentures (60) s'engrenant les unes dans les autres, qui sont disposées de préférence dans des régions (58) mutuellement adjacentes des leviers (34, 36) à côté des pivots (42, 44).

14. Appareil selon l'une quelconque ou plusieurs des revendications précédentes, **caractérisé en ce que** l'élément de commutation d'entraînement de conduite (28), qui est de préférence un étrier d'entraînement de conduite, et l'agencement de levier (32) sur un longeron de guidage (22) de l'appareil (10), sont prévus de préférence dans une région d'extrémité (24) de celui-ci.

15. Appareil selon la revendication 14, **caractérisé en ce que** l'élément de commutation d'entraînement de conduite (28) et l'agencement de levier (32) sont montés sur une console (38) pourvue du longeron de guidage (22) ou de sa région d'extrémité (24), sur laquelle console est monté de préférence un étrier de frein moteur (26) de l'appareil (10).
